# EUROPÄISCHE PATENTSCHRIFT

(11) **EP 3 532 597 B1**
(45) Veröffentlichungstag und Bekanntmachung des Hinweises auf die Patenterteilung: **11.11.2020**
(21) Anmeldenummer: 17730648.7
(22) Anmeldetag: 07.04.2017
(51) Int. Cl.: C12G 3/07, C12H 1/22

(54) **BARRIQUEFASS UND VERFAHREN ZUR WIEDERVERWENDUNG EINES SOLCHEN BARRIQUEFASSES**
BARRIQUE BARREL AND METHOD FOR REUSING A BARRIQUE BARREL OF THIS TYPE
BARRIQUE ET PROCÉDÉ DE RÉUTILISATION D'UNE TELLE BARRIQUE

(30) Priorität: 28.10.2016 DE 102016120684
(43) Veröffentlichungstag der Anmeldung: 04.09.2019
(73) Patentinhaber: Lutz, Ulrike, 76756 Bellheim (DE)
(72) Erfinder: LUTZ, Thomas, 76756 Bellheim (DE)
(74) Vertreter: Geitz Truckenmüller Lucht Christ
(86) Internationale Anmeldenummer: PCT/DE2017/100280
(87) Internationale Veröffentlichungsnummer: WO 2018/077324

(56) Entgegenhaltungen:
- EP-A1- 1 739 163
- EP-A1- 2 557 047
- US-A1- 2005 172 817
- US-A1- 2014 010 915
- US-B1- 6 898 834
- US-B1- 9 212 343

## Beschreibung

Die vorliegende Erfindung betrifft ein Barriquefass mit einem Fassboden und einer aus mehreren flüssigkeitsdicht zusammengefügten Fassdauben gebildeten Fasswandung, sowie ein Verfahren zur Wiederverwendung eines solchen Barriquefasses.

Barriquefässer sind Holzfässer zum Ausbau hochwertiger Weine. Die Besonderheit liegt in einer inwendigen Röstung der Fässer, einer so genannten Toastung, bei welcher die in Kontakt mit dem eingelagerten Wein stehenden Wandungsteile Röstaromen an den Wein abgeben können.

Üblicherweise wird für die Herstellung von Fässern Eichenholz verwendet, das reich an niedermolekularen organischen Inhaltsstoffen ist, welche in den Wein extrahiert werden können. Hydrolysierbare Polyphenole, darunter hauptsächlich Ellagtannine, stellen die wichtigste Fraktion hieraus dar.

Es ist bekannt, dass die beim Ausbau freigesetzten Tannine bei einer ersten Belegung eines Barriquefasses einen größeren Einfluss auf den Weingeschmack haben, da sie bei der ersten Belegung zahlreicher im gerösteten Holz vorhanden sind. Bei der zweiten Belegung wird die Lagerzeit üblicherweise daher bereits verlängert, über eine dritte Belegung hinaus werden die Fässer aus diesem Grund in der Regel nicht benutzt. Zwar werden alte Barriquefässer häufig für die Lagerung von Whisky benutzt, aber die Kosten für die Anschaffung der Fässer sind für die Weinbauern ausgesprochen hoch und schlagen sich deutlich im Weinpreis nieder. Nicht zuletzt ist auch der Baumbestand zu berücksichtigen, der keine völlig beliebige Herstellung von Barriquefässern erlaubt. Die Anmeldung US6898834 offenbart einen Tank, der auch gebrauchte Fassdauben enthält, die auf diese Weise wiederverwendet werden können. Ferner lehrt EP2557047 einen Behälter bestehend aus mehreren verschiedenen Fassdauben.

Vor diesem Hintergrund wurde bereits nach Alternativen gesucht, und es werden unter anderem geröstete Holzchips in Edelstahlfässer eingebracht, welche die Röstaromen nach allen Seiten an den Wein abgeben, oder die Röstaromen werden gar direkt in Pulverform in den Wein gemischt. Solche Weine, soweit sie das Aroma von Barriqueweinen überhaupt erreichen, dürfen jedoch zumindest nicht als solche deklariert werden, so dass der herkömmliche Ausbau momentan mehr oder weniger alternativlos ist.

Hiervon ausgehend liegt der vorliegenden Erfindung die Aufgabe zu Grunde, ein Barriquefass zu schaffen, das mehr als nur dreimal belegbar ist, ohne dass sich die zusätzlichen Belegungen negativ auf das Weinaroma auswirkt.

Dies gelingt durch ein Barriqefass gemäß den Merkmalen des Anspruchs 1. Weitere sinnvolle Ausgestaltungen eines solchen Barriquefasses können den Unteransprüchen 2 bis 8 entnommen werden. Ebenfalls gelingt dies durch ein Barriquefass gemäß den Merkmalen des nebengeordneten Anspruchs 9 sowie der Weiterbildung gemäß Unteranspruch 10. Hieraus ergibt sich auch ein Verfahren zur Wiederverwendung eines Barriquefasses gemäß den Merkmalen des nebengeordneten Anspruchs 11, welches durch den Unteranspruch 12 weitergebildet wird.

Erfindungsgemäß ist vorgesehen, ein zerlegbares Barriquefass zu schaffen, so dass die einzelnen Fassdauben im zerlegten Zustand oder in einem Teilverbund wiederaufbereitet werden können, um erneut in einem Barriquefass eingesetzt zu werden. Die Wiederaufbereitung der Fassdauben sieht dabei vor, die mit dem Wein in Kontakt stehende Innenseite abzutragen, insbesondere abzuschleifen oder abzuhobeln, und anschließend das darunterliegende, noch frische Holz erneut zu Rösten und die Fassdauben oder Teilverbunde anschließend wieder zu einem vollständigen Fass zusammenzusetzen. Der Abtrag wird je nach Bedarf einige wenige Millimeter betragen. Alternativ und grundsätzlich von der Erfindung mit abgedeckt ist es, das Fass zunächst wieder zusammenzusetzen und dann an der Innenseite zu rösten.

Hierzu soll ein Barriquefass, wie im Stand der Technik üblich, zumindest aus einem Fassboden und einer Fasswandung bestehen, wobei die Fasswandung aus einer Mehrzahl von flüssigkeitsdicht miteinander verbundenen Fassdauben zusammengesetzt ist.

Herkömmliche Fassformen sind jedoch zum einen nicht zerlegbar, weil sie beim Fassbinden gegen ihre Natur verformen und beim Zerlegen nicht wieder in ihre alte Form zurückkehren. Die beim Fassbinden erreichte Verpressung der Fassdauben gegeneinander entfiele hierbei. Zum anderen würde ein Abtragen der Fassinnenwände bewirken, dass die einzelnen Fassdauben zu dünn würden und eine andere Form bekämen. Der Erfindung liegt daher auch eine andere Fasskonstruktion zugrunde.

Mehrere Fassdauben werden gemäß der Erfindung lösbar zu einem in sich geschlossenen Schichtring verbunden, mehrere Schichtringe ihrerseits lösbar zu einer Fasswandung aufgeschichtet. Hierdurch entsteht eine Fasswandung, die auf einem Fassboden, oder auch zwischen einem Fassboden und einem Fassdeckel, zusammengehalten werden kann. In einer ersten Näherung reicht es aus, die Schichten miteinander durch Klemmen, Zwingen oder Korpuspressen miteinander zu verbinden und in Position zu halten, um die genannte lösbare Verbindung zu schaffen.

Alternativ hierzu kann die Reihenfolge der Verbindung der Fassdauben untereinander abweichen, indem zunächst übereinanderliegende Fassdauben miteinander zu Fasswänden verbunden und mehrere, vorzugsweise gleichartige, solchermaßen hergestellte Fasswände zu einer Fasswandung zusammengefügt werden. Entsprechend kann es beim Zerlegen ausreichen, die Wände wieder voneinander zu trennen, ohne diese wiederum in einzelne Fassdauben zu zerlegen. Zusammenhängende Fasswände können auch im Ganzen durch Abschleifen wiederaufbereitet und anschließend geröstet werden.

Aufgrund dieser Lösung kann das für das Barriquefass eingesetzte Material wiederverwertet werden, so dass nach einer Befüllung, oder den üblichen drei Befüllungen, nicht das ganze Fass entsorgt werden muss, sondern nur eine dünne Schicht auf dessen Innenseite. Dies kommt zum Einen den Kosten für das Fass zugute, sorgt auf der anderen Seite aber auch für einen deutlich verringerten Holzeinschlag an Eichenholz.

Für die beschriebene Konstruktion ist es nicht zwingend erforderlich, scheint aber besonders vorteilhaft, die einzelnen Schichtringe rechteckig aufzubauen, also die Fassdauben lang und gerade auszubilden. Die Fassdauben können je nach gewünschter Fassform unterschiedlich lang und hoch sein, die Dicke kann unterschiedlich vorgegeben sein, ändert sich aber im erfindungsgemäßen Wiederaufbereitungsverfahren ohnehin mit jedem Abtragen der Innenseite.

Bei rechteckigen Schichtringen besteht eine bevorzugte Formgebung der Fassdauben darin, dass ein Innenbereich und ein Außenbereich der Fassdauben vorhanden ist, wobei die Bereiche ohne sichtbare Grenze ineinander übergehen. Der Außenbereich endet beiderseits in einem Eckblatt, also einem Quaderförmigen Überstand, dessen Überhangsweite seiner eigenen Breite und dessen Überhangshöhe seiner eigenen Höhe entspricht. Auf einer Seite der Fassdaube ist das Eckblatt oben, auf der gegenüberliegenden Seite unten angeformt, so dass sich die Eckblätter zweier gleichartiger Fassdauben zu einer Eckblattverbindung zusammensetzen und durch jeweilige stirnseitige Verschraubungen verbinden lassen.

Gleichzeitig endet der Innenbereich aber in einer Gehrung, so dass Gehrung und Eckblatt zueinander an beiden Enden der Fassdaube benachbart sind. Hierdurch lassen sich jeweils zwei Fassdauben über eine Eckblattverbindung an ihren Außenbereichen verbinden, während die Innenbereiche nur mit ihren Gehrungen aneinanderliegen. Beim Abtragen der Innenseite sorgt die Gehrung aber dafür, dass bei jedem Grad der Abtragung die Innenform gleich bleibt. Die Fassdauben verlieren also durch die Abtragung der Innenseite im Verbund nicht an Dichtigkeit.

Sofern die reine Verpressung der Fasswandung mit Zwingen, Pressen oder Klammern nicht als ausreichend angesehen wird, ist es zusätzlich möglich, dass die einzelnen Fassdauben Verbindungen mithilfe weiterer Verbindungsmittel vorsehen.

Zunächst kann dies bedeuten, dass die Fassdauben randständige, hinterschnittene Nuten an ihren außen liegenden Längskanten aufweisen, die beispielsweise trapezförmig geschnitten sind. Liegen zwei Fassdauben aufeinander, wobei die Trapezausnehmungen deckungsgleich aufeinanderliegen, so ergänzen sie sich zu einer Doppeltrapezausnehmung, in welche ein entsprechender Doppeltrapezkörper eingebracht werden kann. Solche Doppeltrapezkörper sind in Deutschland etwa unter dem Namen "Hoffmann-Schwalbe" bekannt.

Alternativ oder ergänzend können die Fassdauben auch Bohrungen aufweisen, welche die Fassdauben parallel zur Innenseite durchqueren. Durch diese können über die gesamte Höhe der Fasswandung Gewindestangen durchgeführt sein, welche an ihren Enden mit endständigen Abschlusselementen, wie beispielsweise Muttern, Köpfen, Flügelmuttern und dergleichen mehr abgeschlossen werden. Hierbei ist durch ein Anziehen der Abschlusselemente eine Verspannung der Fassdauben gegeneinander möglich, so dass auch auf diesem Wege die Dichtigkeit hergestellt werden kann. Nach Bedarf kann auch der Fassboden und/oder der Fassdeckel mit eingespannt werden.

Die Ausnehmungen und Bohrungen zur Anordnung der Verbindungselemente sind bevorzugtermaßen im Außenbereich der Fassdauben angeordnet, während der Innenbereich von Verbindungsmitteln und Aufnahmen hierfür freigehalten wird. Beim wiederholten Abtragen der Innenseite wird dadurch die Haltbarkeit der Verbindungen zwischen den Schichtringen nicht beeinflusst und der Innenbereich steht vollständig zur Abtragung und Wiederaufbereitung des Barriquefasses zur Verfügung.

Hinsichtlich des Fassbodens kann zunächst ohne Weiteres ein reiner Holzboden vorgesehen werden, um auf diese Weise ein hundertprozentiges Holzfass zu schaffen. Es kann aber etwa auch ein Boden, beispielsweise aber nicht ausschließlich aus harzgepresstem Holzwerkstoff, zur Herstellung einer Bodenplatte eingesetzt werden, welcher mit einer Edelstahlplatte überzogen wird. Hierdurch wird die Wiederaufbereitung des Bodens eingespart.

Alternativ zu der vorbeschriebenen schichtweisen Anordnung der Fassdauben umfasst die Erfindung auch einen zylindrischen Fassaufbau, bei dem die einzelnen Fassdauben senkrecht stehen. Im Gegensatz zu herkömmlichen Holzfässern werden die Fassdauben aber zu einer Wandung zusammengezogen, ohne das Holz dabei vorzuspannen. Vielmehr werden lösbare Verbindungen zwischen den einzelnen Fassdauben geschaffen, welche bei einem Auseinandernehmen und Wiederaufbereiten zunächst gelöst und dann wieder zusammengesetzt werden können.

Wesentlich ist hierbei, dass die Fassdauben gerade und im Querschnitt trapezförmig gebildet sind, so dass ein Abnehmen einer Schicht auf der Innenseite gezielt möglich ist und die Dichtigkeit des Fasses, also insbesondere die Außenkonturen der einzelnen Fassdauben, sich beim Abtragen der Innenseite nicht verändert. Nur dann ist es möglich, ein Barriquefass im Sinne der Erfindung zu zerlegen, inwendig abzuschleifen und anschließend wieder zu einer flüssigkeitsdichten Konstruktion zusammenzufügen. Auch hier kann das Rösten der Fassdauben vor oder nach dem Zusammenfügen erfolgen.

Die vorstehende Erfindung wird im Folgenden anhand eines Ausführungsbeispiels näher erläutert.

Es zeigen
- Figur 1: ein wiederaufbereitbares Barriquefass mit einer Fasswandung aus einer Mehrzahl von Schichtringen in einer frontalen Draufsicht von vorne,
- Figur 2: eine Fassdaube zur Bildung eines Schichtrings in einer perspektivischen Darstellung von schräg oben,
- Figur 3: eine Verbindung aus zwei Fassdauben in einer perspektivischen Darstellung von schräg oben,
- Figur 4: den Bodenbereich des Barriquefasses gemäß Figur 1 in einer ausschnittsweisen frontalen Querschnittsdarstellung, sowie
- Figur 5: den Deckelbereich des Barriquefasses gemäß Figur 1 in einer ausschnittsweisen frontalen Querschnittsdarstellung.

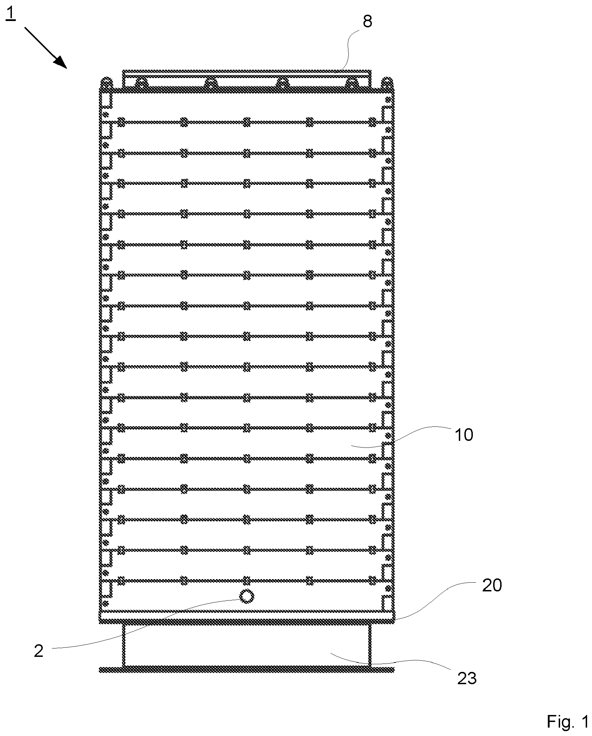

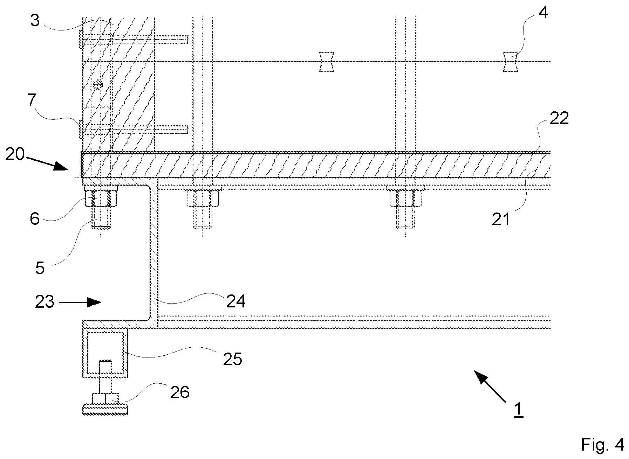

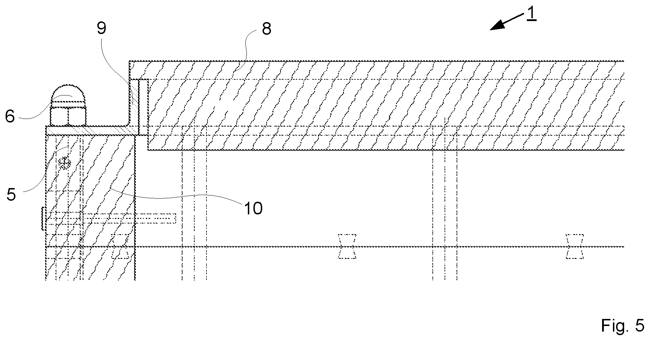

Figur 1 zeigt ein Barriquefass 1, welches aus einer Vielzahl von Schichtringen 10 aufgebaut ist. Die Schichtringe 10 bestehen ihrerseits jeweils aus mehreren Fassdauben, die lösbar miteinander verbunden sind. Zur Verbindung der Schichtringe 10 untereinander ist einmal eine Mehrzahl von Gewindestangen zur Klammerung aller Schichtringe und eines Fassbodens 20 vorgesehen, sowie zur Verbindung jeweils benachbarter Schichtringe eine Verklemmung mithilfe von Doppeltrapezverbindern. Diese Verbindungen werden in Figuren 4 und 5 näher beschrieben.

Das Barriquefass 1 hat einen in einem untersten Schichtring angeordneten Ablasshahn zur Entnahme des gelagerten Weines und einen Sockel 23 zur erhöhten Lagerung und zur Vereinfachung der Entnahme. Ein Fassdeckel 8 ist so gestaltet, dass er auf das Fass aufgelegt und nicht mit diesem fest verbunden ist, um Zugriff auch von der Oberseite her auf das Innere des Barriquefass 1 zu haben.

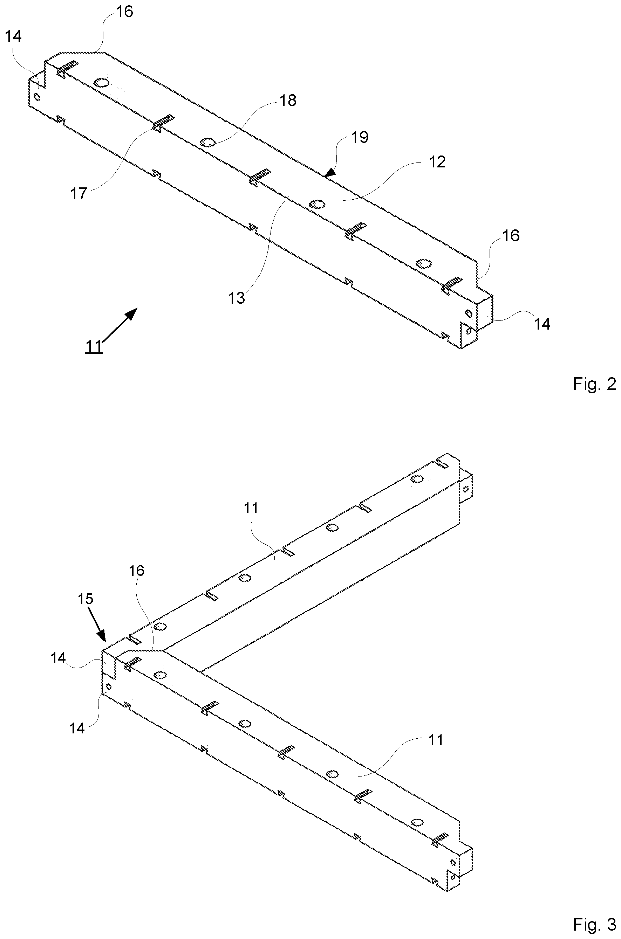

Figur 2 zeigt eine einzelne Fassdaube 11, welche im vorliegenden Fall mit drei weiteren, gleichartigen Fassdauben 11 zu einem quadratischen Schichtring 10 verbunden werden kann. Die Fassdaube 11 ist aus Eichenholz hergestellt und lang und gerade und weist eine hier abgewandte Innenseite 19 auf, deren Fläche geröstet bzw. "getoastet" ist. Diese Innenseite 19 ist im bestimmungsgemäß aufgebauten Zustand des Barriquefasses 1 dem Wein zugewandt.

Die Fassdaube 11 ist der Länge nach unterteilt in einen Innenbereich 12 und einen Außenbereich 13, die fließend ineinander übergehen. Der Außenbereich 13 endet an den Stirnseiten der Fassdaube 11 in einem Eckblatt 14, wobei die endständigen Eckblätter 14 gegeneinander versetzt angeordnet sind. Hierdurch können gleichartige Fassdauben miteinander verbunden werden, ohne dass bei dem Zusammenbau eines Barriquefasses 1 besonders darauf geachtet werden müsste, wo welche Fassdaube eingesetzt wird. Im Gegensatz zu dem Außenbereich 13 endet der Innenbereich 12 an den Stirnseiten der Fassdaube 11 jedoch nicht in einem Eckblatt, sondern in einer Gehrung. Dadurch ist es möglich, die gesamte Innenseite 19 bei einer Wiederaufbereitung des Barriquefasses abzutragen, ohne an den Rändern Überstände stehen zu lassen, um die Kantendichtigkeit zu gewährleisten.

Die Fassdaube 11 weist bis in die Tiefe des Außenbereichs 13 Trapezausnehmungen 17 auf, welche hinterschnittene Nuten darstellen, deren Querschnitt trapezförmig ist. Zwei aufeinanderliegende Fassdauben 11 ergänzen ihre Trapezausnehmungen 17 jeweils zu Doppeltrapezausnehmungen, in welche Verbindungselemente in Form von Doppeltrapezen 4 eingebracht werden können. Dies ist in Figuren 4 und 5 näher dargestellt.

Um die bereits in Figur 1 gezeigten Gewindestangen durch die Fasswandung 3 treiben zu können, weisen die Fassdauben 11 zudem im Außenbereich 13 Bohrungen 18 auf, die sich durch mehrere übereinanderliegende Fassdauben zu einem durchgehenden Einschubkanal für die Gewindestangen 5 ergänzen.

Figur 3 zeigt zwei zusammengesetzte Fassdauben 11, bei denen sich die Eckblätter 14 formschlüssig überlappen und die Gehrung 16 diese formschlüssige Verbindung in Richtung der Innenseite fortsetzt. Die so entstehende Eckblattverbindung 15 sorgt im Außenbereich 13 mit einer in Figuren 4 und 5 näher gezeigte Verschraubung 7 für eine kraftschlüssige Verbindung innerhalb des Schichtrings 10, während in Richtung der Innenseite die Formschlüssigkeit zu einer dichten Verbindung der Fassdauben 11 führt.

Figur 4 zeigt den Bodenbereich des Barriquefasses 1, der im vorliegenden Fall durch eine harzgetränkte Platte gebildet wird, die einen Holzboden 21 bildet. Dieser ist von einem Edelstahlblech 22 überzogen, welches bei dieser Konstruktion in Kontakt mit dem Wein gerät und dessen Aroma nicht beeinflusst. Eine Wiederaufbereitung betrifft daher hier nicht den Fassboden 20.

Um eine Entnahme zu ermöglichen, ist der Fassboden 20 auf einem Sockel 23 aufgestellt, der aus einem umlaufenden C-Profil 24 besteht, an dessen Innensite auch die Gewindestangen 5 aus der Fasswandung 3 herauslaufen und gekontert sind. Das C-Profil 24 wiederum steht auf einem Rechteckprofil 25, in welchem Standfüße 26 angeordnet sind.

In der Figur 4 ebenfalls gezeigt sind die Doppeltrapeze 4, welche in die korrespondierenden Trapezausnehmungen 17 der Fassdauben eingebracht sind. Sie halten neben den Gewindestangen 5 die Fasswandung 3 zusammen. Die Verschraubungen 7 sorgen dafür, dass benachbarte Fassdauben 11 eines Schichtrings 10 miteinander verbunden werden.

Figur 5 zeigt schließlich den Bereich des Fassdeckels 8, welcher im vorliegenden Fall auf einem L-Profil 9 aufgelegt ist. Das L-Profil 9 liegt auf einem obersten Schichtring 10 auf und wird, wie die Schichtringe 10, von den Gewindestangen 5 durchgriffen. Ein Abschlusselement 6 in Form einer Hutmutter spannt die Gewindestange 5 gegen das C-Profil 24 und presst so die Fassdauben 11 der Fasswandung 3 flüssigkeitsdicht gegeneinander.

Vorstehend beschrieben ist somit ein wiederaufbereitbares Barriquefass, dessen Fassdauben schichtweise zusammengefügt sind und ein wiederholtes Abtragen ihrer Innenseite erlauben, so dass ein wiederholtes Rösten der Innenseite und ein deutlich häufigerer Einsatz ermöglicht sind.

### BEZUGSZEICHENLISTE

- 1: Barriquefass
- 2: Ablasshahn
- 3: Fasswandung
- 4: Doppeltrapez
- 5: Gewindestange
- 6: Abschlusselement
- 7: Verschraubung
- 8: Fassdeckel
- 9: L-Profil
- 10: Schichtring
- 11: Fassdaube
- 12: Innenbereich
- 13: Außenbereich
- 14: Eckblatt
- 15: Eckblattverbindung
- 16: Gehrung
- 17: Trapezausnehmung
- 18: Bohrung
- 19: Innenseite
- 20: Fassboden
- 21: Holzboden
- 22: Edelstahlblech
- 23: Sockel
- 24: C-Profil
- 25: Rechteckprofil
- 26: Standfuß

## Patentansprüche

1. Barriquefass mit einem Fassboden (20) und einer aus mehreren flüssigkeitsdicht zusammengefügten Fassdauben (11) gebildeten Fasswandung (3),
**dadurch gekennzeichnet, dass** mehrere an einer Innenseite (19) geröstete, im Wesentlichen gerade Fassdauben (11) lösbar miteinander zu in sich geschlossenen, zumindest im Wesentlichen rechteckigen Schichtringen (10) verbunden sind, welche ihrerseits untereinander lösbar flüssigkeitsdicht verbunden sind und dadurch die Fasswandung (3) bilden.

2. Barriquefass gemäß Anspruch 1, **dadurch gekennzeichnet, dass** die Fassdauben (11) einen Innenbereich (12) und einen Außenbereich (13) aufweisen, wobei der Innenbereich (12) zu den Enden hin in jeweils eine Gehrung (16) und der Außenbereich (13) zu den Enden hin in jeweils ein Eckblatt (14) ausläuft.

3. Barriquefass gemäß Anspruch 2, **dadurch gekennzeichnet, dass** zwei benachbarte Fassdauben (11) eines Schichtrings (10) an ihren Enden mittels eines Eckblatts (14) zusammengefügt sind, wobei die Eckblattverbindung (15) an der Außenseite des Schichtrings (10) angeordnet ist und sich an die Eckblattverbindung (15) in Richtung des Schichtringinneren eine Gehrung anschließt.

4. Barriquefass gemäß einem der Ansprüche 2 oder 3, **dadurch gekennzeichnet, dass** zwei benachbarte Schichtringe (10) mithilfe von Verbindungselementen in Form eines Doppeltrapezes (4) verbunden sind, welche in eine aus zwei deckungsgleich angeordneten, randständigen Trapezausnehmungen (17) zweier benachbarter Fassdauben (11) gebildete Doppeltrapezausnehmung eingebracht werden.

5. Barriquefass gemäß einem der Ansprüche 2 bis 4, **dadurch gekennzeichnet, dass** die Fasswandung (3) mithilfe von die Schichtringe (10) der Höhe nach durchgreifenden, wenigstens einseitig mit einem lösbaren Abschlusselement (6) versehenen Verbindungselementen in Form von Gewindestangen (5) zwischen dem Fassboden (20) und einem obersten Schichtring (10), oder zwischen dem Fassboden (20) und einem Fassdeckel (8) eingespannt ist.

6. Barriquefass gemäß einem der Ansprüche 4 oder 5, **dadurch gekennzeichnet, dass** die Verbindungselemente im Außenbereich (13) der Fassdauben (11) angeordnet sind und den Innenbereich (12) der Fassdauben (11) freihalten.

7. Barriquefass gemäß einem der vorhergehenden Ansprüche, **dadurch gekennzeichnet, dass** der Fassboden (20) aus einem harzgepressten Holzwerkstoff gebildet und zumindest abschnittsweise mit einem Edelstahlblech (22) überzogen ist.

8. Verfahren zur Wiederverwendung eines Barriquefasses (1) gemäß einem der vorhergehenden Ansprüche, wobei die lösbaren Verbindungen zwischen den Schichtringen (10) und zwischen den einzelnen Fassdauben (11) aufgelöst werden, die einzelnen Fassdauben (11) an ihrer Innenseite (19) abgeschliffen und wieder zu Schichtringen (10) und diese wieder zu einer flüssigkeitsdichten Fasswandung (3) lösbar zusammengefügt werden, wobei die Fassdauben (11) vor oder nach dem Zusammenfügen auf ihrer Innenseite (19) erneut geröstet werden.

9. Verfahren zur Wiederverwendung eines Barriquefasses (1) gemäß einem der vorhergehenden Ansprüche, wobei die lösbaren Verbindungen zwischen den Fassdauben (11) der einzelnen Schichtringe (10), nicht aber der übereinanderliegenden Fassdauben (11) aufgelöst werden, die so entstehenden Fasswände an ihrer Innenseite (19) im Verbund abgeschliffen und wieder zu einer flüssigkeitsdichten Fasswandung (3) lösbar zusammengefügt werden, wobei die Fassdauben (11) vor oder nach dem Zusammenfügen der Fasswände zu einer Fasswandung (3) auf ihrer Innenseite (19) erneut geröstet werden.

10. Verfahren gemäß Anspruch 9 oder 10, soweit jeweils auf Anspruch 2 zurückbezogen, **dadurch gekennzeichnet, dass** die Wiederverwendung bis zum vollständigen Aufbrauchen des Innenbereichs (12) der Fassdauben (11) durch wiederholtes Abtragen der gerösteten Innenseite (19) des Innenbereichs (12) und erneutes Rösten der durch das Abschleifen entstehenden neuen Innenseite (19) iteriert wird.

## Claims

1. Barrique barrel comprising a barrel bottom (20) and a barrel wall (3) formed from a plurality of barrel staves (11) which are assembled in a liquid-tight manner, **characterized in that** a plurality of substantially straight barrel staves (11) which are toasted on an inner face (19) are detachably connected to one another to form closed, at least substantially rectangular layer rings (10), which in turn are detachably connected to one another in a liquid-tight manner and thereby form the barrel wall (3).

2. Barrique barrel according to claim 1, **characterized in that** the barrel staves (11) have an inner region (12) and an outer region (13), the inner region (12) extending toward the ends, in each case into a miter (16), and the outer region (13) extending toward the ends, in each case into a halved joint (14).

3. Barrique barrel according to claim 2, **characterized in that** two adjacent barrel staves (11) of a layer ring (10) are assembled at their ends by means of a halved joint (14), the halved joint connection (15) being arranged on the outer face of the layer ring (10) and a miter adjoining the halved joint connection (15) in the direction of the layer ring interior.

4. Barrique barrel according to either claim 2 or claim 3, **characterized in that** two adjacent layer rings (10) are connected by means of connection elements in the shape of a double trapezoid (4), which connection elements are introduced into a double trapezoidal recess which is formed from two congruently arranged, peripheral trapezoidal recesses (17) of two adjacent barrel staves (11).

5. Barrique barrel according to any of claims 2 to 4, **characterized in that** the barrel wall (3) is clamped between the barrel bottom (20) and an uppermost layer ring (10), or between the barrel bottom (20) and a barrel lid (8), by means of connection elements in the form of threaded rods (5), which connection elements vertically pass through the layer rings (10) and are provided with a detachable end element (6) at least on one side.

6. Barrique barrel according to either claim 4 or claim 5, **characterized in that** the connection elements are arranged in the outer region (13) of the barrel staves (11) and keep the inner region (12) of the barrel staves (11) free.

7. Barrique barrel according to any of the preceding claims, **characterized in that** the barrel bottom (20) is formed from a resin-pressed wood material and is covered with a stainless steel sheet (22), at least in portions.

8. Method for reusing a barrique barrel (1) according to any of the preceding claims, wherein the detachable connections between the layer rings (10) and between the individual barrel staves (11) are detached, the individual barrel staves (11) are abraded on their inner face (19) and are detachably reassembled to form layer rings (10) and said layer rings are detachably reassembled to form a liquid-tight barrel wall (3), the barrel staves (11) being toasted again on their inner face (19) before or after the assembly.

9. Method for reusing a barrique barrel (1) according to any of the preceding claims, wherein the detachable connections between the barrel staves (11) of the individual layer rings (10), but not the barrel staves (11) lying above one another, are detached, the barrel walls created in this manner are abraded together on their inner face (19) and are detachably reassembled to form a liquid-tight barrel wall (3), the barrel staves (11) being toasted again on their inner face (19) before or after the barrel walls have been assembled to form a barrel wall (3).

10. Method according to either claim 9 or claim 10, insofar as they are each dependent on claim 2, **characterized in that** the reuse is iterated until the inner region (12) of the barrel staves (11) is completely used up by repeatedly removing the toasted inner face (19) of the inner region (12) and again toasting the new inner face (19) created by the abrasion.

## Revendications

1. Barrique comportant un fond de fût (20) et une paroi de fût (3) formée de plusieurs douves de fût (11) reliées entre elles de manière étanche aux liquides, **caractérisée en ce que** plusieurs douves de fût (11) sensiblement droites et chauffées sur un côté interne (19) sont reliées l'une à l'autre de manière amovible pour former des anneaux en couches (10) au moins sensiblement rectangulaires se fermant sur eux-mêmes, lesquels anneaux sont à leur tour reliés entre eux de manière amovible et étanche aux liquides et forment ainsi la paroi de fût (3).

2. Barrique selon la revendication 1, **caractérisée en ce que** les douves de fût (11) présentent une zone interne (12) et une zone externe (13), la zone interne (12) se terminant vers les extrémités par un onglet (16), et la zone externe (13) se terminant vers les extrémités par une feuille d'angle (14).

3. Barrique selon la revendication 2, **caractérisée en ce que** deux douves de fût (11) adjacentes d'un anneau en couches (10) sont rassemblées à leurs extrémités au moyen d'une feuille d'angle (14), la liaison de feuille d'angle (15) étant disposée sur le côté externe de l'anneau en couches (10), et un onglet étant relié à la feuille d'angle (15) en direction de l'intérieur de l'anneau en couches.

4. Barrique selon l'une des revendications 2 ou 3, **caractérisée en ce que** deux anneaux en couches (10) adjacents sont reliés au moyen d'éléments de liaison sous forme de double trapèze (4), lesquels éléments de liaison sont insérés dans un évidement de double trapèze formé par deux évidements de trapèze (17) marginaux superposables de deux douves de fût (11) adjacentes.

5. Barrique selon l'une des revendications 2 à 4, **caractérisée en ce que** la paroi de fût (3) est serrée entre le fond de fût (20) et un anneau en couches (10) supérieur, ou entre le fond de fût (20) et un couvercle de fût (8), à l'aide d'éléments de liaison sous forme de tiges filetées (5) qui traversent les anneaux en couches (10) dans le sens vertical et sont pourvues, sur au moins un côté, d'un élément de fermeture amovible (6).

6. Barrique selon l'une des revendications 4 ou 5, **caractérisée en ce que** les éléments de liaison sont disposés dans la zone externe (13) des douves de fût (11) et maintiennent libre la zone interne (12) des douves de fût (11).

7. Barrique selon l'une des revendications précédentes, **caractérisée en ce que** le fond de fût (20) est constitué d'un matériau en bois pressé de résine et est recouvert au moins dans certaines régions d'une feuille d'acier inoxydable (22).

8. Procédé de réutilisation d'une barrique (1) selon l'une des revendications précédentes, dans lequel les liaisons amovibles entre les anneaux en couches (10) et entre les différentes douves de fût (11) sont rompues, les différentes douves de fût (11) sont meulées sur leur côté interne (19) et rassemblées à nouveau de manière amovible pour former des anneaux en couches (10), lesquels anneaux sont rassemblées à nouveau de manière amovible pour former une paroi de fût (3) étanche aux liquides, les douves de fût (11) étant à nouveau chauffées sur leur côté interne (19) avant ou après leur assemblage.

9. Procédé de réutilisation d'une barrique (1) selon l'une des revendications précédentes, dans lequel les liaisons amovibles entre les douves de fût (11) des différents anneaux en couches (10), mais pas entre les douves de fut (11) superposées, sont rompues, les parois de fût ainsi formées sont meulées sur leur côté interne (19) de manière composite et à nouveau rassemblées de manière amovible pour former une paroi de fût (3) étanche aux liquides, les douves de fût (11) étant à nouveau chauffées sur leur côté interne (19) avant ou après l'assemblage des parois de fût pour former une paroi de fût (3).

10. Procédé selon la revendication 9 ou 10, dans la mesure où elle dépend de la revendication 2, **caractérisé en ce que** la réutilisation est itérée jusqu'à épuisement complet de la zone interne (12) des douves de fût (11) par enlèvement répété du côté interne (19) chauffé de la zone interne (12) et par réchauffage du côté interne (19) obtenu par meulage.
